# EUROPÄISCHE PATENTSCHRIFT

(11) **EP 3 390 975 B1**
(45) Veröffentlichungstag und Bekanntmachung des Hinweises auf die Patenterteilung: **01.01.2020**
(21) Anmeldenummer: 16797843.6
(22) Anmeldetag: 15.11.2016
(51) Int. Cl.: G01F 1/58, G01F 1/60, G01F 25/00

(54) **MAGNETISCH-INDUKTIVES DURCHFLUSSMESSGERÄT**
MAGNETICALLY INDUCTIVE FLOW METER
DÉBITMÈTRE MAGNÉTO-INDUCTIF

(30) Priorität: 14.12.2015 DE 102015121730
(43) Veröffentlichungstag der Anmeldung: 24.10.2018
(73) Patentinhaber: Endress+Hauser Flowtec AG, 4153 Reinach (CH)
(72) Erfinder: FINK, Nikolai, 4147 Aesch (CH); SCHMALZRIED, Frank, 85406 Zolling (DE); RUFER, Heinz, 4143 Dornach (CH); DRAHM, Wolfgang, 85435 Erding (DE)
(74) Vertreter: Andres, Angelika Maria
(86) Internationale Anmeldenummer: PCT/EP2016/077699
(87) Internationale Veröffentlichungsnummer: WO 2017/102207

(56) Entgegenhaltungen:
- WO-A1-2007/110310
- DE-A1-102004 044 606
- DE-A1-102014 014 003
- US-A- 4 010 644

## Beschreibung

Die Erfindung betrifft ein magnetisch-induktives Durchflussmessgerät zur Messung der Durchflussgeschwindigkeit oder des Volumendurchflusses von Medien in einer Rohrleitung sowie ein Verfahren zur Umsetzung des magnetisch-induktiven Durchflussmessgeräts.

Das Grundprinzip magnetisch-induktiver Durchflussmessgeräte ist bereits seit langem bekannt. Hierbei wird ein leitfähiges Medium, welches durch ein Messrohr strömt, mit einem Magnetfeld durchsetzt, wodurch eine elektrische Spannung im Medium induziert wird. Diese elektrische Spannung ist idealerweise proportional zur Stärke des angelegten Magnetfeld und zur Durchflussgeschwindigkeit des Mediums. Durch Messen der Spannung lassen sich Rückschlüsse auf die Durchflussgeschwindigkeit bzw. den Volumendurchfluss ziehen. Weiterentwicklungen solcher Durchflussmessgeräte befassen sich unter anderem mit Verbesserungen der Signalqualität, Verringerung des Energieverbrauchs oder Verringerung der Fertigungskosten, Die noch unveröffentlichte Patentanmeldung DE 102015103580.4 beschreibt ein magnetisch-induktives Durchflussmessgerät, wobei das Durchflussmessgerät ein erstes Magnetsystem mit mindestens einer Spule mit einem magnetischen Spulenkern und ein zweites Magnetsystem mit mindestens einem Permanentmagnet aufweist. Dieses Permanentmagnetsystem ist dazu eingerichtet, zur Überwachung des Durchflusses eines Mediums ein permanentes Magnetfeld zu erzeugen. Bei einer definierten Durchflussänderung wird das erste Magnetsystem hinzugezogen, um den Durchfluss mit hoher Genauigkeit zu messen. Durch das nur falls notwendig verwendete erste Magnetsystem lässt sich Energie sparen. Jedoch hat dieses Durchflussmessgerät den Nachteil, dass der Materialaufwand durch die Notwendigkeit eines Spulenkerns und eines Permanentmagnets erhöht ist. Darüber hinaus ist die Anordnung des ersten Magnetsystems und des zweiten Magnetsystems mit Schwierigkeiten verbunden. Entweder werden die Magnetfelder des ersten Magnetsystems und des zweiten Magnetsystems überlagert um einen kompakten Aufbau zu erreichen, oder beide Systeme werden schräg zueinander eingebaut. Ersteres hat den Vorteil einer kompakten Anordnung am Messrohr, trägt allerdings den Nachteil, dass das zum Messen verwendete Gesamtmagnetfeld nicht um einen Nullpunkt oszilliert, sondern um das durch den Permanentmagnet definierte statische Magnetfeld. Letzteres hat den Vorteil einer größeren Unabhängigkeit der Magnetsysteme voneinander, allerdings wird ein zweites Elektrodenpaar benötigt und die Anordnung der Magnetsysteme ist mit größerer räumlicher Ausdehnung verbunden Ein andere Durchflussmessgerät ist im Dokument DE 10 2014 014 003 offenbart, das ein Elektromagnetsystem und ein Permanentmagnet aufweist.

**Aufgabe der vorliegenden Erfindung** ist es daher, ein magnetisch-induktives Durchflussmessgerät mit Durchflussüberwachung sowie ein einfaches und robustes Verfahren zum Betrieb des Durchflussmessgeräts vorzuschlagen, wobei die Messung und die Überwachung des Durchflusses durch ein einziges Magnetsystem realisiert wird. Die Aufgabe wird erfindungsgemäß gelöst durch eine Vorrichtung gemäß dem unabhängigen Anspruch 1 und durch ein Verfahren gemäß dem unabhängigen Anspruch 8

**Das erfindungsgemäße Durchflussmessgerät** zur Messung der Durchflussgeschwindigkeit oder des Volumendurchflusses von Medien in einer Rohrleitung umfasst dabei ein Messrohr; und mindestens ein Magnetsystem welches am Messrohr angeordnet ist mit jeweils mindestens einer Spule, welche Spule dazu eingerichtet ist, ein ein- und ausschaltbares Magnetfeld wählbarer Polarität zu erzeugen; und mindestens ein Paar Messelektroden;
wobei das Magnetsystem weiterhin mindestens einen Permanentmagnet aufweist, welcher dazu eingerichtet ist, ein remanentes Magnetfeld zu erzeugen, welches Magnetfeld im Messrohr im Wesentlichen quer zur Längsachse des Messrohrs orientiert ist,
wobei die Spule dazu eingerichtet ist, eine Richtung des remanenten Magnetfelds einzustellen,
wobei das remanente Magnetfeld das nach Abschalten des durch die Spule erzeugten Magnetfelds das verbleibende Magnetfeld des Permanentmagnets ist,
wobei das Paar Messelektroden dazu eingerichtet ist, die durch das remanente Magnetfeld induzierte elektrische Messspannung abzugreifen,
wobei das Durchflussmessgerät mindestens eine elektronische Betriebsschaltung aufweist, welche Betriebsschaltung dazu eingerichtet ist, die durch das Paar Messelektroden abgegriffene Messspannung zu überwachen oder zu messen, wobei die Betriebsschaltung mindestens zwei Betriebsmodi aufweist,
wobei ein erster Betriebsmodus eine Überwachung der Durchflussgeschwindigkeit oder des Volumendurchflusses eines Mediums durch Überwachen der abgegriffenen Messspannung beinhaltet, wobei ein zweiter Betriebsmodus eine Messung der Durchflussgeschwindigkeit oder des Volumendurchflusses des Mediums durch Messen und Auswerten von einer ersten Messspannung und einer zweiten Messspannung, welche Messspannungen durch zwei unterschiedliche remanente Magnetfelder induziert werden,
wobei die Betriebsschaltung weiterhin dazu eingerichtet ist, nach Eintreten eines Prüfkriteriums vom ersten Betriebsmodus in den zweiten Betriebsmodus zu wechseln.

Bevorzugterweise wird man für das Erzeugen eines remanenten Magnetfelds ein Material wählen, dessen Magnetisierung nach Abschalten externer Magnetfelder nur geringfügig nachlässt.

In einer Ausgestaltung des Durchflussmessgeräts ist das Prüfkriterium zum Wechseln vom ersten in den zweiten Betriebsmodus mindestens eines der folgenden Kriterien:
Mindeständerungsrate der Messspannung,
Mindeständerung der Messspannung,
Ablauf eines Zeitintervalls.

In einer Ausgestaltung des Durchflussmessgeräts ist mindestens eines der Kriterien anpassbar. So kann beispielsweise der zeitliche Verlauf der Messspannung als Grundlage für eine Anpassung mindestens eines der Kriterien herangezogen werden.

In einer Ausgestaltung des Durchflussmessgeräts ist die Betriebsschaltungen dazu eingerichtet, im zweiten Betriebsmodus mehrere Messungen der Durchflussgeschwindigkeit oder des Volumendurchflusses des Mediums durchzuführen, wobei das Kriterium zum Wechseln vom zweiten in den ersten Betriebsmodus mindestens eines der folgenden Kriterien ist:
Änderung des ermittelten Durchflusses kleiner als ein Mindestdurchfluss-Grenzwert MD über mindestens zwei Messungen,
Erreichen einer festgelegten Anzahl von n Messungen.

In einer Ausgestaltung des Durchflussmessgeräts ist mindestens ein Kriterium zum Wechseln vom zweiten Betriebsmodus in den ersten Betriebsmodus anpassbar.

In einer Ausgestaltung des Durchflussmessgeräts weist das Magnetsystem des Weiteren mindestens ein Leitblech auf, welches Leitblech dazu eingerichtet ist, dass remanente Magnetfeld vom Magnetsystem zum Messrohr zu führen. Diese Ausgestaltung hat den Vorteil, dass für das Erzeugen eines im Messrohr nahezu homogenen Magnetfelds nur eine Spule und ein Permanentmagnet notwendig ist. Dadurch lässt sich der Materialaufwand und die Komplexität des Durchflussmessgeräts weiter reduzieren.

In einer Ausgestaltung des Durchflussmessgeräts wird nach Wechseln vom ersten Betriebsmodus in den zweiten Betriebsmodus vor Messung der ersten Messspannung (M1) die Stärke und/oder Richtung des remanenten Magnetfelds neu eingestellt. Dadurch lässt sich die Messgenauigkeit insbesondere der Messung der ersten Messspannung erhöhen.

**Ein erfindungsgemäßes Verfahren** zur Umsetzung des erfindungsgemäßen Durchflussmessgeräts weist dabei folgende Schritte auf:
Einsatz des ersten Betriebsmodus zur Überwachung der Durchflussgeschwindigkeit oder des Volumendurchflusses des Mediums;
Mit Eintreten mindestens eines der Kriterien
   1. Mindeständerungsrate der Messspannung,
   2. Mindeständerung der Messspannung,
   3. Ablauf eines Zeitintervalls,
Wechseln in den zweiten Betriebsmodus zur Messung der Durchflussgeschwindigkeit oder des Volumendurchflusses des Mediums;
Nach Beenden der Messung der Durchflussgeschwindigkeit oder des Volumendurchflusses des Mediums, Wechseln in den ersten Betriebsmodus.

Es wird also durch die vorliegende Erfindung ein magnetisch-induktives Durchflussmessgerät sowie ein Verfahren zum Betreiben des Durchflussmessgeräts vorgeschlagen.

Im Folgenden wird die Erfindung anhand von Grafiken näher erläutert.

Es zeigt:
Fig. 1: ein beispielhaftes Flussdiagramm zur Umsetzung eines Verfahrens zum Betreiben eines Durchflussmessgeräts;
Fig. 2: ein beispielhafter zeitlicher Verlauf einer durch das Durchflussmessgerät gemessenen Elektrodenspannung;
Fig. 3: ein beispielhaftes magnetisch-induktives Durchflussmessgerät in einem Querschnitt;
Fig. 4: ein weiteres beispielhaftes magnetisch-induktives Durchflussmessgerät in einem Querschnitt;

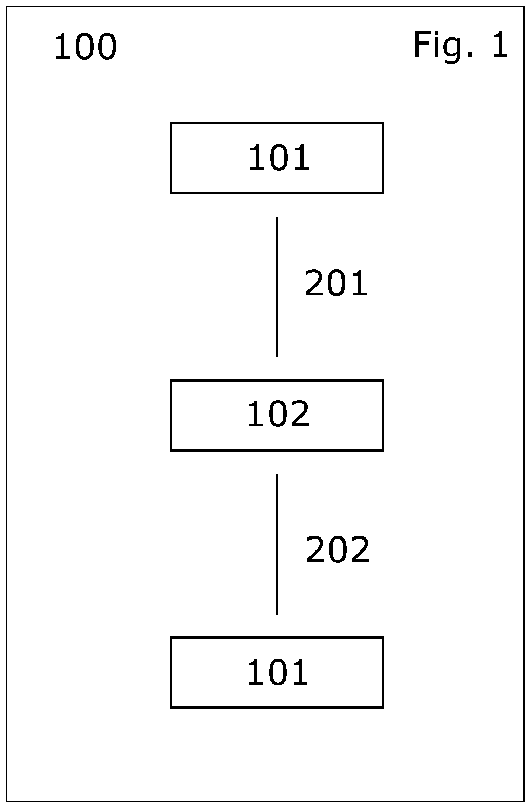

Fig. 1 zeigt ein Flussdiagramm, in welchem die wesentlichen Schritte eines Verfahrens 100 zum Betreiben eines Durchflussmessgeräts aufgezeigt sind. Zunächst befindet sich das Durchflussmessgerät in einem ersten Betriebsmodus 101, wobei der erste Betriebsmodus eine Überwachung der Durchflussgeschwindigkeit oder des Volumendurchflusses eines Mediums durch Überwachen der abgegriffenen Messspannung Um beinhaltet. Nach Eintreten 201 eines Prüfkriteriums wird das Durchflussmessgerät durch eine Betriebsschaltung dazu veranlasst, vom ersten Betriebsmodus 101 in einen zweiten Betriebsmodus 102 zu wechseln, wobei der zweite Betriebsmodus 102 eine Messung der Durchflussgeschwindigkeit oder des Volumendurchflusses des Mediums durch Messen und Auswerten von zwei Messspannungen bei jeweils unterschiedlichen remanenten Magnetfeldern beinhaltet. Nach Beenden 202 der Messung von zwei Messspannungen wird das Durchflussmessgerät dazu veranlasst vom zweiten Betriebsmodus 102 in den ersten Betriebsmodus 101 zu wechseln.

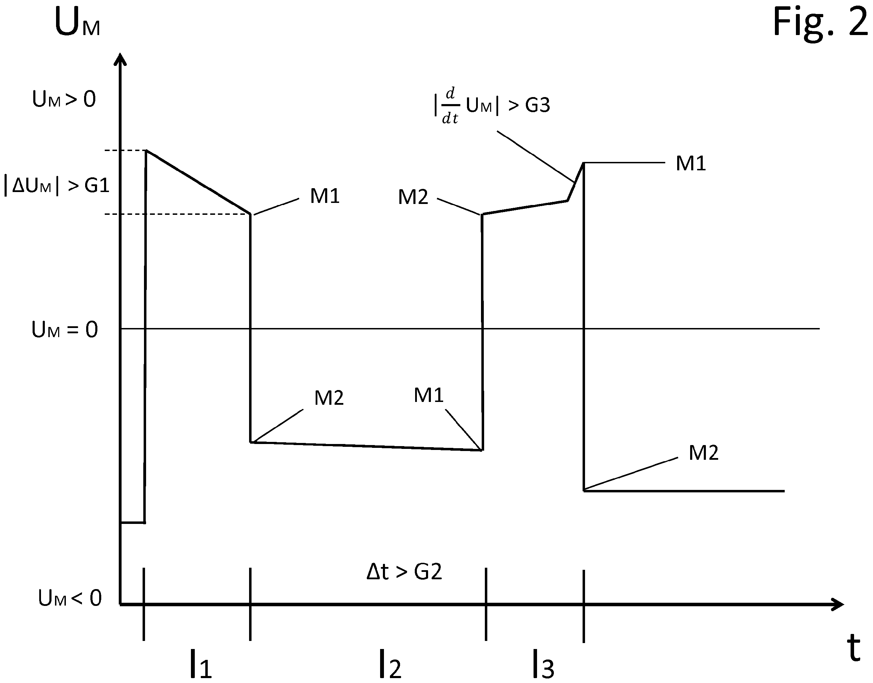

Fig. 2 zeigt einen beispielhaften zeitlichen Verlauf der durch ein Elektrodenpaar gemessenen Messspannung U_{M}. Der Verlauf gliedert sich in drei Überwachungsintervalle, in welchen sich das Durchflussmessgerät im Betriebsmodus 101 befindet und die Messspannung Um überwacht. Nach Eintreten eines Kriteriums 201, welches Kriterium beispielsweise eine Mindeständerung der Messspannung Um oder eine Mindestdauer eines Intervalls oder durch eine Mindeständerungsrate der Messspannung gegeben sein kann, wechselt das Durchflussmessgerät vom Betriebsmodus 101 in den Betriebsmodus 102 und führt eine Messung der Durchflussgeschwindigkeit oder des Volumendurchflusses des Mediums durch Messen und Auswerten von zwei Messspannungen bei jeweils unterschiedlichen remanenten Magnetfeldern durch. Beispielsweise findet im Überwachungsintervall I1 die Erfüllung 201 mindestens eines Kriteriums zum Wechseln vom ersten in den zweiten Betriebsmodus durch eine Mindeständerung der Messspannung statt, wobei die Mindeständerung größer G1 ist. In Folge dessen wechselt das Durchflussmessgerät in den Betriebsmodus 102 und misst zwei Messspannungen M1 und M2. Nach Beenden 202 der Messung wechselt das Durchflussmessgerät zurück in den ersten Betriebsmodus. In diesem Beispiel ist die zeitliche Dauer der Durchflussmessung im zweiten Betriebsmodus kurz gegen die Dauer der Überwachung der Messspannung im ersten Betriebsmodus, so dass der Messmodus 102 durch vertikale Linien dargestellt ist. So geschieht im Überwachungsintervall I1 ein Überschreiten einer Mindeständerung der Messspannung, wobei die Änderung größer als ein Spannungswert G1 ist. Daraufhin wird eine Durchflussmessung durch Messung zweier Messspannungswerte M1 und M2 durchgeführt, um im Anschluss das folgende Überwachungsintervall I2 zu starten. Während des Überwachungsintervalls I2 geschieht ein Überschreiten einer Überwachungsintervallhöchstdauer G2, wobei mit Überschreiten von G2 vom Überwachungsmodus in den Messmodus gewechselt wird um erneut eine Durchflussmessung durch Messung zweier Messspannungen M1 und M2 durchzuführen. Im folgenden Überwachungsmodus I3 geschieht ein Überschreiten einer Höchständerungsrate der Messspannung wobei die zeitliche Änderung der Messspannung größer ist als ein Wert G3, womit ein weiteres Kriterium zum Wechseln vom Betriebsmodus 101 in den Betriebsmodus 102 erfüllt ist.

In einer vorteilhaften Ausführung wird nach Wechsel vom ersten Betriebsmodus in den zweiten Betriebsmodus vor Messung der Messspannung M1 zunächst das remanente Magnetfeld umgepolt, um dann mit dem Messen von zwei Messspannungen M1 und M2 fortzufahren.

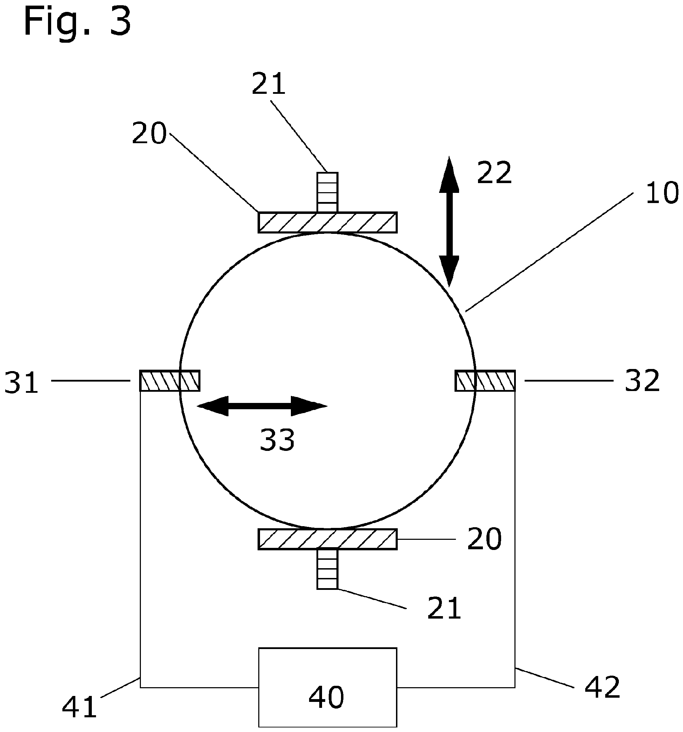

Fig. 3 zeigt einen Querschnitt durch das Messrohr 10 eines Durchflussmessgeräts wobei sich im Querschnitt zwei Spulen 20 und zwei Permanentmagnete 21 eines ein Magnetsystems sowie ein Messetektrodenpaar bestehend aus den Messelektroden 31 und 32 befinden. Das Magnetsystem dient zur Erzeugung eines remanenten Magnetfelds in die durch Pfeil 22 gezeigte Richtung, was eine durchflussabhängige, induzierte Messspannung in die durch Pfeil 33 gezeigte Richtung zur Folge hat. Die Messspannung wird durch das Messelektrodenpaar abgegriffen und durch die Leitungen 41, 42 der Betriebsschaltung 40 zugeführt. Die Betriebsschaltung ist dazu eingerichtet, die Messspannung zu überwachen und zu messen. Erkennt die Betriebsschaltung die Notwendigkeit einer Änderung der Magnetfeldstärke oder der Magnetfeldrichtung bezüglich des Messelektrodenpaars 31, 32 durch Eintreten 201 eines Kriteriums, wird das Magnetfeld der zugehörigen Permanentmagnete 21 durch einen Magnetfeldpuls der zu den Permanentmagneten gehörigen Spulen 20 geändert.

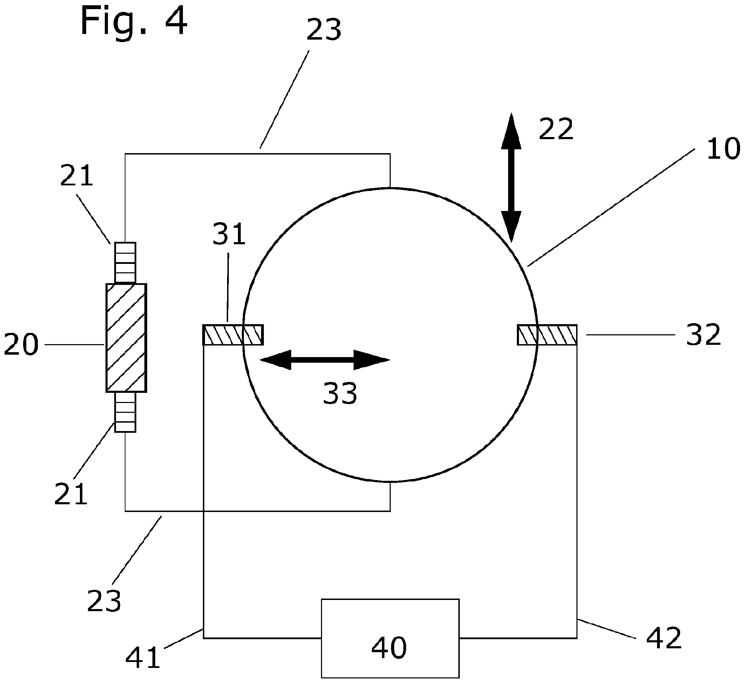

Fig. 4 zeigt einen Querschnitt durch ein weiteres Ausführungsbeispiel eines erfindungsgemäßen Durchflussmessgeräts. Hierbei befindet ist das Magnetsystem nicht am Messrohr angeordnet, wobei das durch das Magnetsystem erzeugte remanente Magnetfeld durch magnetisch leitfähige Leitbleche 23 zum Messrohr geführt wird, so dass das Magnetfeld im Messrohr 10 im Wesentlichen quer zur Längsachse des Messrohrs orientiert ist.

### Bezugszeichenliste

- 10: Messrohr
- 20: Spule
- 21: Permanentmagnet
- 22: Richtung des erzeugten Magnetfelds
- 23: Leitbleche
- 30: Messelektrodenpaar
- 31, 32: Messelektrode
- 33: Richtung der induzierten Messspannung
- 40: Betriebsschaltung
- 41, 42: Leitung Messelektrode - Betriebsschaltung
- Uₘ: Messspannung
- Iₙ, n={1,2,3}: Überwachungsintervalle
- 100: Verfahren zum Betrieb des Durchflussmessgeräts
- 101: Erster Betriebsmodus
- 102: Zweiter Betriebsmodus
- 201: Erfüllung mindestens eines Kriteriums zum Wechseln von 101 nach 102
- G1: Maximalwert der Messspannungsänderung
- G2: Maximalwert der Intervalldauer
- G3: Maximalwert der Änderungsrate der Messspannung
- MD: Mindestdurchfluss

## Patentansprüche

1. Magnetisch-induktives Durchflussmessgerät zur Messung der Durchflussgeschwindigkeit oder des Volumendurchflusses von Medien in einer Rohrleitung, umfassend:
Ein Messrohr (10); und mindestens ein Magnetsystem ist mit jeweils mindestens einer Spule (20), welche Spule dazu eingerichtet ist, ein ein- und ausschaltbares Magnetfeld zu erzeugen; und mindestens ein Paar Messelektroden (31, 32);
wobei das Magnetsystem weiterhin mindestens einen Permanentmagneten (21) aufweist, welcher dazu eingerichtet ist, im Messrohr (10) ein remanentes Magnetfeld zu erzeugen, welches Magnetfeld im Messrohr (10) im Wesentlichen quer zur Längsachse des Messrohrs orientiert ist,
**dadurch gekennzeichnet, dass**
die Spule (20) dazu eingerichtet ist, die Richtung des remanenten Magnetfelds zu ändern,
wobei das remanente Magnetfeld das nach Abschalten des durch die Spule (20) erzeugten Magnetfelds das verbleibende Magnetfeld des Permanentmagnets ist,
wobei das Paar Messelektroden (31, 32) dazu eingerichtet ist, die durch das remanente Magnetfeld induzierte elektrische Messspannung (33) abzugreifen,
wobei das Durchflussmessgerät mindestens eine elektronische Betriebsschaltung (40) aufweist, welche Betriebsschaltung dazu eingerichtet ist, die durch das Paar Messelektroden (31, 32) abgegriffene Messspannung (33) zu überwachen und/oder zu messen,
wobei die Betriebsschaltung mindestens zwei Betriebsmodi aufweist,
wobei ein erster Betriebsmodus eine Überwachung der Durchflussgeschwindigkeit oder des Volumendurchflusses eines Mediums durch Überwachen der abgegriffenen Messspannung beinhaltet, wobei ein zweiter Betriebsmodus mindestens eine Messung der Durchflussgeschwindigkeit oder des Volumendurchflusses des Mediums durch Messen und Auswerten von einer ersten Messspannung (M1) und einer zweiten Messspannung (M2) beinhaltet, welche Messspannungen durch zwei unterschiedliche remanente Magnetfelder induziert werden,
wobei die Betriebsschaltung weiterhin dazu eingerichtet ist, nach Eintreten eines Prüfkriteriums vom ersten Betriebsmodus in den zweiten Betriebsmodus zu wechseln.

2. Durchflussmessgerät nach Anspruch 1,
wobei das Prüfkriterium zum Wechseln vom ersten in den zweiten Betriebsmodus mindestens eines der folgenden Kriterien ist:
Mindeständerungsrate der Messspannung,
Mindeständerung der Messspannung,
Ablauf eines Zeitintervalls.

3. Durchflussmessgerät nach Anspruch 2,
wobei mindestens eines der Kriterien anpassbar ist.

4. Durchflussmessgerät nach einem der vorigen Ansprüche,
wobei die Betriebsschaltungen dazu eingerichtet ist, im zweiten Betriebsmodus mehrere Messungen der Durchflussgeschwindigkeit oder des Volumendurchflusses des Mediums durchzuführen, wobei das Kriterium zum Wechseln vom zweiten in den ersten Betriebsmodus mindestens eines der folgenden Kriterien ist:
Änderung des ermittelten Durchflusses kleiner als ein Mindestwert MD über mindestens zwei Messungen,
Erreichen einer festgelegten Anzahl von n Messungen.

5. Durchflussmessgerät nach Anspruch 4,
wobei mindestens ein Kriterium zum Wechseln vom zweiten Betriebsmodus in den ersten Betriebsmodus anpassbar ist.

6. Durchflussmessgerät nach einem der vorigen Ansprüche,
wobei das Magnetsystem des Weiteren mindestens ein Leitblech (23) aufweist, welches Leitblech dazu eingerichtet ist, dass remanente Magnetfeld vom Magnetsystem zum Messrohr (10) zu führen.

7. Durchflussmessgerät nach einem der vorigen Ansprüche,
wobei nach Wechseln vom ersten Betriebsmodus in den zweiten Betriebsmodus vor Messung der ersten Messspannung (M1) die Richtung des remanenten Magnetfelds geändert wird.

8. Verfahren zur Messung der Durchflussgeschwindigkeit oder des Volumendurchflusses von Medien in einer Rohrleitung mittels eines magnetisch-induktiven Durchflussmessgeräts nach mindestens einem der Ansprüche 1-7, wobei das Verfahren folgende Schritte aufweist:
Einsatz des ersten Betriebsmodus zur Überwachung der Durchflussgeschwindigkeit oder des Volumendurchflusses des Mediums;
Mit Eintreten mindestens eines der Kriterien
1. Mindeständerungsrate der Messspannung,
2. Mindeständerung der Messspannung,
3. Ablauf eines Zeitintervalls,
Wechseln in den zweiten Betriebsmodus zur Messung der Durchflussgeschwindigkeit oder des Volumendurchflusses des Mediums;
Mit Eintreten mindestens eines der Kriterien
1. Änderung des ermittelten Durchflusses kleiner als ein Mindestdurchfluss-Grenzwert MD über mindestens zwei Messungen,
2. Erreichen einer festgelegten Anzahl von n Messungen,
Beenden der Messung der Durchflussgeschwindigkeit oder des Volumendurchflusses des Mediums und Wechseln in den ersten Betriebsmodus.

## Claims

1. Electromagnetic flowmeter for measuring the flow velocity or the volume flow of media in a pipe, comprising:
A measuring tube (10); and at least a magnet system with at least one coil (20), said coil being designed to generate a magnetic field which can be activated and deactivated; and at least one pair of measuring electrodes (31, 32); wherein the magnet system further comprises at least a permanent magnet (21), which is designed to generate a remanent magnetic field in the measuring tube (10), said magnetic field being oriented in the measuring tube (10) in a manner that is essentially perpendicular to the longitudinal axis of the measuring tube,
**characterized**
**in that** the coil (20) is designed to change the direction of the remanent magnetic field, wherein the remanent magnetic field is the residual magnetic field of the permanent magnet that remains after the deactivation of the magnetic field generated by the coil (20), the pair of measuring electrodes (31, 32) being designed to measure the electrical measuring voltage (33) induced by the remanent magnetic field, wherein the flowmeter has at least one electronic operating circuit (40), said circuit being designed to monitor and/or measure the measuring voltage (33) measured by the pair of measuring electrodes (31, 32),
wherein the operating circuit has at least two operating modes, wherein a first operating mode comprises the monitoring of the flow velocity or volume flow of a product by monitoring the measured measuring voltage, wherein a second operating mode comprises at least a measurement of the flow velocity or the volume flow of the medium by measuring and evaluating a first measuring voltage (M1) and a second measuring voltage (M2), said measuring voltages being induced by two different remanent magnetic fields,
wherein the operating circuit is further configured to switch from the first operating mode to the second operating mode once a control criterion occurs.

2. Flowmeter as claimed in Claim 1,
wherein the control criterion for switching from the first to the second operating mode is at least one of the following criteria:
Minimum rate of change of the measuring voltage,
Minimum variation of the measuring voltage
Expiration of a time interval.

3. Flowmeter as claimed in Claim 2,
wherein at least one of the criteria is adaptable.

4. Flowmeter as claimed in one of the previous claims,
wherein the operating circuits are designed to conduct several measurements of the flow velocity or the volume flow of the medium in the second operating mode,
wherein the criterion for switching from the second operating mode to the first operating mode is at least one of the following criteria:
The change of the determined flow is less than a minimum value MD over at least two measurements,
A defined number of measurements n is reached.

5. Flowmeter as claimed in Claim 4,
wherein at least one criterion for switching from the second operating mode to the first operating mode is adaptable.

6. Flowmeter as claimed in one of the previous claims,
wherein the magnet system further comprises at least a deflector (23), said deflector being designed to guide the remanent magnetic field from the magnet system to the measuring tube (10).

7. Flowmeter as claimed in one of the previous claims,
wherein after the switch from the first operating mode to the second operating mode the direction of the remanent magnetic field is changed before the first measuring voltage (M1) is measured.

8. Procedure for measuring the flow velocity or the volume flow of media flowing through a pipe using an electromagnetic flowmeter as claimed in at least of the Claims 1-7,
wherein said procedure comprises the following steps:
Use of the first operating mode to monitor the flow velocity or the volume flow of the medium;
Switch to the second operating mode to measure the flow velocity or the volume flow of the medium if at least one of the following criteria occurs:
1. Minimum rate of change of the measuring voltage,
2. Minimum variation of the measuring voltage
3. Expiration of a time interval,
Termination of the measurement of the flow velocity or the volume flow of the medium and switch to the first operating mode if at least one of the following criteria occurs;
1. The change of the determined flow is less than a minimum flow limit value MD over at least two measurements
2. A defined number of measurements n is reached.

## Revendications

1. Débitmètre magnéto-inductif destiné à la mesure de la vitesse d'écoulement ou du débit volumique de produits s'écoulant dans une conduite, comprenant :
Un tube de mesure (10) ; et au moins un système magnétique avec au moins une bobine (20), laquelle bobine est conçue de telle sorte à générer un champ magnétique activable et désactivable ; et au moins une paire d'électrodes de mesure (31, 32) ; le système magnétique comprenant en outre au moins un aimant permanent (21), lequel aimant est conçu de telle sorte à générer un champ magnétique rémanent dans le tube de mesure (10), lequel champ magnétique est orienté, dans le tube de mesure (10), pour l'essentiel perpendiculairement à l'axe longitudinal du tube de mesure,
**caractérisé**
**en ce que** la bobine (20) est conçue de telle sorte à modifier la direction du champ magnétique rémanent, le champ magnétique rémanent étant le champ magnétique restant de l'aimant permanent après désactivation du champ magnétique généré par la bobine (20), la paire d'électrodes de mesure (31, 32) étant conçue de telle sorte à prélever la tension de mesure électrique (33) induite à travers le champ magnétique rémanent, le débitmètre présentant au moins un circuit d'exploitation électronique (40), lequel circuit d'exploitation étant conçu de telle sorte à surveiller et/ou à mesurer la tension de mesure (33) prélevée par la paire d'électrodes de mesure (31, 32),
le circuit d'exploitation présentant au moins deux modes de fonctionnement, un premier mode de fonctionnement contenant une surveillance de la vitesse d'écoulement ou du débit volumique d'un produit par la surveillance de la tension de mesure prélevée, un deuxième mode de fonctionnement contenant au moins une mesure de la vitesse d'écoulement ou du débit volumique du produit par la mesure et l'évaluation d'une première tension de mesure (M1) et d'une deuxième tension de mesure (M2), lesquelles tensions de mesure sont induites par deux champs magnétiques rémanents différents,
le circuit d'exploitation étant en outre conçu de telle sorte à ordonner le passage du premier mode de fonctionnement dans le deuxième mode de fonctionnement après l'apparition d'un critère de contrôle.

2. Débitmètre selon la revendication 1,
pour lequel le critère de contrôle relatif au passage du premier dans le deuxième mode de fonctionnement est au moins l'un des critères suivants :
Taux de variation minimal de la tension de mesure,
Variation minimale de la tension de mesure
Écoulement d'un intervalle de temps.

3. Débitmètre selon la revendication 2,
pour lequel au moins l'un des critères est adaptable.

4. Débitmètre selon l'une des revendications précédentes,
pour lequel les circuits de fonctionnement sont conçus de telle sorte à effectuer, dans le deuxième mode de fonctionnement, plusieurs mesures de la vitesse d'écoulement ou du débit volumique, le critère de passage du deuxième au premier mode de fonctionnement étant au moins l'un des critères suivants :
Modification du débit déterminé inférieure à une valeur minimale MD sur au moins deux mesures,
Atteinte d'un nombre défini de n mesures.

5. Débitmètre selon la revendication 4,
pour lequel au moins un critère de passage du deuxième mode de fonctionnement au premier mode de fonctionnement est adaptable.

6. Débitmètre selon l'une des revendications précédentes,
pour lequel le système magnétique comprend en outre un déflecteur (23), lequel déflecteur est conçu de telle sorte à guider le champ magnétique rémanent du système magnétique vers le tube de mesure (10).

7. Débitmètre selon l'une des revendications précédentes,
pour lequel, après un passage du premier mode de fonctionnement au deuxième mode de fonctionnement avant la mesure de la première tension de mesure (M1), la direction du champ magnétique rémanent est modifiée.

8. Procédé destiné à la mesure de la vitesse d'écoulement ou du débit volumique de produits s'écoulant dans une conduite au moyen d'un débitmètre magnéto-inductif selon au moins l'une des revendications 1-7,
lequel procédé comprend les étapes suivantes :
Utilisation du premier mode de fonctionnement pour la surveillance de la vitesse d'écoulement ou du débit volumique du produit ;
Avec l'apparition d'au moins l'une des critères suivants
1. Taux de variation minimal de la tension de mesure,
2. Variation minimale de la tension de mesure
3. Écoulement d'un intervalle de temps,
Passage au deuxième mode de fonctionnement pour la mesure de la vitesse d'écoulement ou du débit volumique du produit ;
Avec l'apparition d'au moins l'une des critères suivants
1. Variation du débit déterminé inférieure à la valeur seuil du débit minimal MD sur au moins deux mesures,
2. Atteinte d'un nombre défini de n mesures,
Fin de la mesure de la vitesse d'écoulement ou du débit volumique du produit et passage dans le premier mode de fonctionnement.
